# EUROPEAN PATENT SPECIFICATION

(11) **EP 3 068 932 B1**
(45) Date of publication and mention of the grant of the patent: **17.04.2019**
(21) Application number: 14862807.6
(22) Date of filing: 04.11.2014
(51) Int. Cl.: D01F 1/10, C09K 11/02, C09K 11/06, D21H 21/30, D21H 21/40, D21H 13/08, D21H 21/48

(54) **LUMINESCENT FIBERS, ARTICLES INCLUDING THE SAME, AND METHODS OF FORMING THE SAME**
LUMINESZENTE FASERN, ARTIKEL DAMIT UND VERFAHREN ZUR HERSTELLUNG DAVON
FIBRES LUMINESCENTES, ARTICLES COMPRENANT LESDITES FIBRES, ET PROCÉDÉS DE FORMATION DESDITES FIBRES

(30) Priority: 14.11.2013 US 201361904216 P; 27.10.2014 US 201414524221
(43) Date of publication of application: 21.09.2016
(73) Proprietor: Honeywell International Inc., Morris Plains, NJ 07950 (US)
(72) Inventor: POTRAWA, Thomas, Morristown, New Jersey 07962-2245 (US)
(74) Representative: Crooks, Elizabeth Caroline
(86) International application number: PCT/US2014/063779
(87) International publication number: WO 2015/073250

(56) References cited:
- CN-A- 102 586 917
- US-A- 3 740 402
- US-A- 5 770 110
- US-A1- 2004 106 008
- US-A1- 2004 106 008
- US-A1- 2009 114 355
- US-A1- 2009 130 097
- US-B2- 7 357 986
- US-B2- 8 330 122

## Description

### PRIORITY CLAIMS

This application claims the benefit of U.S. Provisional Application No. 61/904,216, filed November 14, 2013.

### TECHNICAL FIELD

The technical field generally relates to luminescent fibers that include a luminescent compound, articles including the luminescent fibers, and methods of forming the luminescent fibers. More particularly, the technical field relates to luminescent fibers that include an organic luminescent compound that retains luminescent properties after forming the luminescent fibers, articles including the luminescent fibers, and methods of forming the luminescent fibers.

### BACKGROUND

Luminescent fibers are known for use in various authentication applications. For example, value documents such as banknotes and checks often include the luminescent fibers to provide one mechanism for authentication of the value documents. The luminescent fibers are generally incorporated in or on the value documents, often within substrate material of the value documents such as paper stock, and the luminescent fibers are generally difficult to remove or add to the substrate material after original production of the value documents.

Conventional luminescent fibers are dyed with organic luminescent dyes that emit radiation upon stimulation by UV or visible light, with the emitted radiation detected either by human or machine observation. Regenerated cellulose such as, but not limited to, cupro, lyocell, viscose, and modal, are commonly employed as the luminescent fibers due to excellent compatibility with paper stock. However, incorporation of conventional organic luminescent dyes into the fibers that include the regenerated cellulose while retaining luminescent properties of the luminescent dyes is often challenging. In particular, regeneration processes that are employed to form the regenerated cellulose often involve harsh processing conditions and employ compounds that denature the organic luminescent dyes. As a result, many luminescent dyes are coated on surfaces of the fibers that include the regenerated cellulose after production of the fibers. However, surface coatings are subject to wear and may exhibit breakdown or change of the luminescent properties due to environmental conditions such as humidity and pH. While inorganic pigments in particulate form have been incorporated into the fibers that include the regenerated cellulose, the inorganic pigments generally exhibit high abrasivity and generally must be present in high densities, both of which features modify the basic physical properties of the fibers that include the regenerated cellulose. Further, high loading of the inorganic pigments is generally required to achieve sufficiently high luminescent emissions. US 2009/114355 relates to organic fluorescent compositions having a triazole moiety. CN102586917 discloses a method for preparing fluorescent anti-counterfeiting Lyocell fibers.

Accordingly, it is desirable to provide luminescent fibers that include organic luminescent compounds that retain luminescent properties even when present under harsh conditions associated with regenerating cellulose such that the organic luminescent compounds can be incorporated within the fibers that include the regenerated cellulose, as opposed to only coating a surface of the fibers that include the regenerated cellulose. In addition, it is desirable to provide articles including the luminescent fibers and methods of forming the luminescent fibers. Furthermore, other desirable features and characteristics of the present invention will become apparent from the subsequent detailed description of the invention and the appended claims, taken in conjunction with the accompanying drawings and this background of the invention.

### BRIEF SUMMARY

Luminescent fibers, articles including the luminescent fibers, and methods of forming the luminescent fibers are provided herein. The luminescent fiber includes a regenerated cellulose and a luminescent polycyclic compound comprising a heterocyclic ring, wherein the heterocyclic ring comprises two nitrogen atoms therein, and wherein the luminescent polycyclic compound is incorporated into the regenerated cellulose, wherein the luminescent compound is a luminescent bicyclic compound that includes the heterocyclic ring and one additional ring, and wherein said luminescent bicyclic compound is a substituted or unsubstituted quinazolinone.

In another embodiment, an article includes a substrate and luminescent fibers incorporated in the substrate, wherein the luminescent fibers include a regenerated cellulose and a luminescent polycyclic compound comprising a heterocyclic ring, wherein the heterocyclic ring comprises two nitrogen atoms therein, wherein the luminescent compound is a luminescent bicyclic compound that includes the heterocyclic ring and one additional ring, and wherein said luminescent bicyclic compound is a substituted or unsubstituted quinazolinone.

In another embodiment, a method of forming luminescent fibers includes combining a cellulose solution and a luminescent polycyclic compound to produce a fiber-forming composition, wherein combining the cellulose solution and the luminescent polycyclic compound comprises regenerating cellulose in the cellulose solution in the presence of the luminescent polycyclic compound to form the fiber-forming composition, and wherein the luminescent polycyclic compound includes a heterocyclic ring, and wherein the heterocyclic ring includes two nitrogen atoms therein, and wherein the luminescent polycyclic compound is a luminescent bicyclic compound that includes the heterocyclic ring and one additional ring, and wherein said luminescent bicyclic compound is a substituted or unsubstituted quinazolinone. The fiber-forming composition is spun to form the luminescent fibers.

### BRIEF DESCRIPTION OF THE DRAWINGS

The various embodiments will hereinafter be described in conjunction with the following drawing, wherein like numerals denote like elements, and wherein:

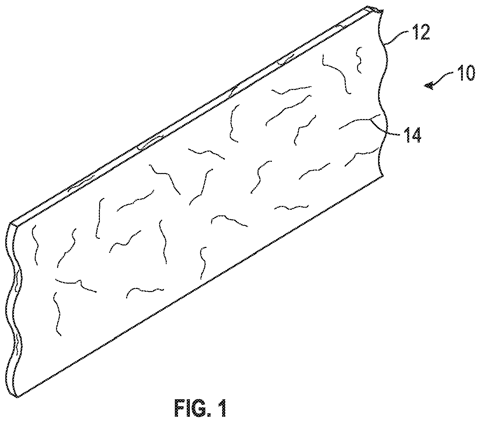

FIG. 1 is a perspective view of an exemplary embodiment of an article including a substrate and luminescent fibers incorporated in the substrate.

### DETAILED DESCRIPTION

The following detailed description is merely exemplary in nature and is not intended to limit the various embodiments or the application and uses thereof. Furthermore, there is no intention to be bound by any theory presented in the preceding background or the following detailed description.

Luminescent fibers, articles including the luminescent fibers, and methods of forming the luminescent fibers are provided herein. The luminescent fibers include a regenerated cellulose and a luminescent polycyclic compound. As referred to herein, "regenerated cellulose" refers to cellulose that is chemically modified through various conventional processes for conversion into semi-synthetic polymer fibers that are generally known as rayon. As also referred to herein, "luminescent polycyclic compound" is a compound that has two identifiable cyclic groups that may or may not share common bonds within the ring structures. The luminescent polycyclic compound includes a heterocyclic ring that has two nitrogen atoms in the heterocyclic ring, i.e., the heterocyclic ring includes at least two nitrogen atoms as part of the ring structure in the heterocyclic ring. The luminescent polycyclic compound retains luminescent properties even when present under harsh conditions associated with regenerating cellulose. Without being bound to any particular theory, it is believed that the heterocyclic ring that includes the two nitrogen atoms provides excellent stability to the luminescent polycyclic compound and enables the luminescent polycyclic compound to retain luminescent properties even when exposed to harsh conditions, such as alkaline conditions, that are associated with regenerating cellulose. As such, the luminescent polycyclic compound may be combined in a cellulose solution during regeneration of the cellulose, prior to spinning, with the luminescent polycyclic compound being present throughout a bulk of the luminescent fibers after spinning, as opposed to only coating a surface of the luminescent fibers.

In an embodiment and as shown in FIG. 1, an article 10 is provided that includes a substrate 12 and luminescent fibers 14 incorporated in the substrate 12. As referred to herein, "incorporated" means that the luminescent fibers 14 may be included in or on the substrate 12. For example, the luminescent fibers 14 may be adhered to a surface of the substrate 12, or may be present both on the surface and beneath the surface of the substrate 12. Specific types of articles 10 that can be employed for purposes herein are not particularly limited and, in various embodiments, the substrate 12 may be rigid or flexible and may be formed from one or more layers or components. The "substrate 12," as referred to herein, is an object into which the luminescent fibers 14 are incorporated, and it is to be appreciated that additional layers or objects may be disposed over the substrate 12 so long as the luminescent fibers 14 can be exposed to light and observed for purposes of authentication. In embodiments, the substrate 12 includes a base material selected from paper, paper pulp, a polymer, plastic, plastic base resin, glass, metal, a textile, fiber, ceramic, wood, a slurry, or a combination thereof. The variety of configurations of substrate 12 are too numerous to mention, as the luminescent fibers 14 described herein may be used in conjunction with a vast array of different types of articles 10. Therefore, although an article 10 that includes a simple, unitary substrate 12 is illustrated in FIG. 1, it is to be appreciated that substrate 12 may have any of a variety of different configurations. Specific examples of suitable articles 10 that can include the luminescent fibers 14 include, but are not limited to, an identification card, a driver's license, a passport, identity papers, a banknote, a check, a document, a paper, a stock certificate, a packaging component, a credit card, a bank card, a label, a seal, or a postage stamp. In embodiments, it is to be appreciated that the substrate 12 may include numerous other features, for security or otherwise, in addition to the luminescent fibers 14 that are described herein.

The luminescent fiber includes regenerated cellulose and a luminescent polycyclic compound. Any conventional regenerated cellulose may be suitable for the luminescent fiber, and the regenerated cellulose may include rayon. Examples of suitable regenerated cellulose include, but are not limited to, those chosen from the group of cupro, lyocell, viscose, modal, or combinations thereof. The aforementioned examples of regenerated cellulose differ by mode of manufacture and various requirements of the cellulose that is subject to regeneration (e.g., lignin-containing or lignin-free), and the various examples of the regenerated cellulose have different physical properties. In all embodiments, the regenerated cellulose is formed by first forming a cellulose solution through conventional techniques. For example, cupro may be formed through the cuprammonium method using an ammoniac copper hydroxide to dissolve the cellulose and form a cellulose solution. As another example, lyocell may be formed through the lyocell process using n-methylmorpholine n-oxide to dissolve the cellulose and form a cellulose solution. As yet another example, viscose may be formed by treating cellulose with sodium hydroxide and carbon disulfide to form a cellulose solution. Viscose is particularly suitable for the luminescent fibers 14 when the luminescent fibers 14 are to be included in articles 10 that have the substrate 12 that includes paper, since the luminescent fiber that includes viscose is highly compatible with customary paper stocks based on cellulose and printable by various printing processes, such as offset, so that there are no problems with using such luminescent fibers 14 for marking papers, specifically value documents.

In the aforementioned techniques, due to the compounds employed to regenerate the cellulose, the cellulose is regenerated under harsh conditions that destroy luminescent properties of various conventional organic luminescent compounds. In particular, the cellulose is generally regenerated under alkaline conditions and at basic pH. However, the luminescent polycyclic compounds described herein are capable of withstanding the harsh regenerating conditions while retaining luminescent properties, thereby enabling the luminescent polycyclic compound to be combined with the cellulose solution prior to spinning. In embodiments, the luminescent fiber is formed by combining the cellulose solution and the luminescent polycyclic compound to produce a fiber-forming composition, followed by spinning the fiber-forming composition. The luminescent polycyclic compound may be combined with the cellulose at any time prior to spinning the fiber-forming composition to form the luminescent fibers 14. In this regard, the cellulose may be regenerated in the cellulose solution in the presence of the luminescent polycyclic compound to form the fiber-forming composition prior to spinning, i.e., the luminescent polycyclic compound may be present in the cellulose solution at the same time as other compounds that are employed to regenerate the cellulose. After spinning, the luminescent fibers 14 are cut to a desired size. Dimensions of the resulting luminescent fibers 14 are not particularly limited. However, in embodiments, the luminescent fibers 14 have an average nominal diameter of from about 3.3 to 28 dtex, and may have a length of from about 2 to 6 mm.

The luminescent polycyclic compound includes two identifiable cyclic groups that may or may not share common bonds within the ring structures. At least one of the cyclic groups is a heterocyclic ring that includes two nitrogen atoms as part of the ring structure. As alluded to above, it is believed that the heterocyclic ring that includes two nitrogen atoms provides excellent stability to the luminescent polycyclic compound and enables the luminescent polycyclic compound to retain luminescent properties even when exposed to harsh conditions, such as alkaline conditions, that are associated with regenerating the cellulose. Examples of suitable heterocyclic rings that may be included in the luminescent polycyclic compound include unsaturated six-membered nitrogen heterocycles such as, pyrazine, pyrimidine and pyridazine, each of which exhibit excellent stability and have stable aromatic rings. All rings in the luminescent polycyclic compound may be heterocyclic, or the luminescent polycyclic compound may have a combination of carbon rings and heterocyclic rings.

The luminescent polycyclic compound is a luminescent bicyclic compound that includes the heterocyclic ring and one additional ring. Luminescent bicyclic compounds for use in the present invention are substituted or unsubstituted quinazolinone. In embodiments, the luminescent polycyclic compound emits radiation in the visible and/or infrared spectrum. Commercially available luminescent polycyclic compounds that include organic derivatives of quinazolinone are sold under the tradename Lumilux® by Honeywell International, Inc. Specific examples of suitable Lumilux® products are Lumilux® Yellow CD 792 and Lumilux® CD394. In embodiments, the luminescent polycyclic compound is present in the luminescent fiber in an amount of at least about 1 weight %, such as from about 1 to about 5 weight %, based on the total weight of the luminescent fiber.

As alluded to above, the luminescent polycyclic compound retains luminescent properties despite being present during regeneration of the cellulose under harsh conditions. Luminescence may be measured in accordance with a lightfastness test whereby a round cuvette (Ø 5 cm) is filled with luminescent fibers 14. The luminescent fibers 14 are irradiated using conventional sun simulation equipment, such as a Hönle SOL 2 unit (sun light behind window class). Fluorescent intensity may be determined under irradiation from a 366 nm UV lamp, with a Luminancemeter from Minolta employed to determine fluorescent intensity in the visible green to yellow spectrum. In embodiments, the luminescent fibers 14 exhibit at least 85% retention of relative intensity in the visible green to yellow spectrum after an irradiation time of 35 hours using the Hönle SOL 2 unit. Furthermore, the luminescent fibers 14 that include the luminescent polycyclic compounds described herein also exhibit excellent chemical resistance to various agents, such as hydrochloric acid, sulfuric acid, ethanol, acetone, and xylene, as determined by retention of fluorescent intensity after exposure to the aforementioned agents. Further still, the luminescent fibers 14 that include the luminescent polycyclic compounds described herein also exhibit excellent thermal stability, as determined by retention of fluorescent intensity after a duration of 30 minutes in an oven at 120°C internal ambient temperature.

The following Examples are intended to illustrate the luminescent fibers 14 as described herein, and are not to be viewed as limiting.

### EXAMPLES

Fibers are prepared in accordance with the following procedure:

A cellulose solution was prepared by treating cellulose with sodium hydroxide and carbon disulfide to form the cellulose solution in accordance with conventional viscose fiber preparation techniques. Prior to spinning the cellulose solution into fibers, the following luminescent compounds shown in TABLE I were added to the cellulose solution in an amount of 3 weight %, based on the total weight of the cellulose solution.

**TABLE I**

| Ex. A | Ex. B | Ex. C | Comp. Ex. A |
|---|---|---|---|
| Lumilux® Yellow CD 792 | Lumilux® Yellowgreen CD 394 | Lumilux® Green CD 308 | Benzothiazole Class Reactive Dye |

Lumilux® Yellow CD 792, Lumilux® Yellowgreen CD 394, and Lumilux® Green CD 308 are all quinazolinone class luminescent polycyclic compounds.

After combining the aforementioned luminescent compounds of Examples A-C into the cellulose solution, the cellulose solution is spun to form luminescent fibers 14. The luminescent fibers 14 of Example C also failed to exhibit luminescent properties, although it is believed that the failure of Example C to exhibit luminescent properties is due to excessive solubility of the luminescent compound under the harsh alkaline and acid conditions of the cellulose spinning procedure, and is not associated with destruction of the luminescent compound. The luminescent compound of Comparative Example A was not combined into the cellulose solution. Luminescent compounds in the benzoxazinone class have exhibited no fluorescent effect after including in cellulose solutions due to destruction of the benzoxazinone class luminescent compounds under the harsh conditions within the cellulose solutions during viscose preparation. It is believed that benzoxazinone class compounds are destroyed because the heterocyclic ring only includes a single nitrogen atom. The viscose fibers of Comparative Example A were prepared by first spinning the viscose fibers and then reactive dyeing the viscose fibers with the benzothiazole class reactive dye.

Chemical resistance of the luminescent fibers 14 is then tested in various solutions as listed below in TABLE II. However, because the luminescent fibers 14 of Example C failed to exhibit luminescence after spinning, Example C was not tested for chemical resistance.

**TABLE II**

| Solvent A | Solvent B | Solvent C | Solvent D | Solvent E | Solvent F |
|---|---|---|---|---|---|
| 5 mol % HCl in Di Water | 5 mol % H2SO4 in Di Water | 5 mol % NaOH in DI Water | Ethanol | Acetone | Xylene |

To test for chemical resistance, approximately 20 ml of short-cut fibers were deposited in a 50 ml beaker. Solutions, as indicated in TABLE II, were then added in different trials to the 50 ml beaker in a sufficient amount to cover the fibers. The fibers were agitated with a glass stick to eliminate air bubbles and to make sure all fibers were wetted with the solvent. Then the fibers were allowed to stand for 30 min at room temperature in the solvent. After this time the fibers were separated (by a nutsch or sieve). The fibers in contact with water based chemicals were rinsed with water and then dried on air under room temperature. Chemical resistance was determined by retention of fluorescent intensity in the yellow to green visible spectrum after exposure to the aforementioned solutions and after irradiation with UV or visible light. TABLE III shows the intensity of fluorescence for Examples A and B, as well as Comparative Example A, indicated on a scale of 0 to 4 with 4 representing a retention of original fluorescent intensity, 3 representing a minor change in fluorescent intensity, 2 representing a considerable change in fluorescent intensity (less than 50% reduction in original intensity), 1 representing a major change in fluorescent intensity (more than 50% reduction in original intensity), and 0 representing total loss in fluorescent intensity, all as determined through visual inspection.

**TABLE III**

| | Solvent A | | Solvent B | | Solvent C | | Solvent D | | Solvent E | | Solvent F | |
|---|---|---|---|---|---|---|---|---|---|---|---|---|
| | UV | Vis | UV | Vis | UV | Vis | UV | Vis | UV | Vis | UV | Vis |
| Ex. A | 4 | 4 | 4 | 4 | 0 | 4 | 4 | 4 | 4 | 4 | 4 | 4 |
| Ex. B | 4 | 4 | 4 | 4 | 1 | 4 | 4 | 4 | 4 | 4 | 4 | 4 |
| Comp. Ex. A | 2 | 2 | 3 | 3 | 0 | 0 | 4 | 4 | 4 | 4 | 4 | 4 |

The luminescent fibers 14 that were tested for chemical resistance, as described above, were also tested for temperature resistance, as determined by retention of fluorescent intensity after a duration of 30 minutes in an oven at 120°C internal temperature. Examples A and B, as well as Comparative Example A, all exhibited fluorescent intensity of 4 as measured in accordance with the methodology described above.

Lightfastness was also tested by filling a round cuvette (Ø 5 cm) with luminescent fibers 14 prepared in accordance with Examples A and B, and also viscose fibers with a reactive dyeing of the luminescent compound of Comparative Example A. The luminescent fibers 14 were irradiated using a Hönle SOL 2 unit (sun light behind window class). Fluorescent intensity was determined under irradiation from a 366 nm UV lamp, with a Luminancemeter from Minolta employed to determine fluorescent intensity. Example A exhibited about a +1% retention of fluorescent intensity after an irradiation time of 35 hours using the Hönle SOL 2 unit, indicating that Example A not only retained its original fluorescent intensity, but actually exhibited increased fluorescent intensity after irradiation for 35 hours. Although this result was not investigated in detail, it is assumed that under irradiation the bleaching of the viscose is faster than the deterioration of the fluorescent compound. The whiter the viscose, the more intense the fluorescence. Example B exhibited about a -12% retention of fluorescent intensity after an irradiation time of 35 hours using the Hönle SOL 2 unit. Comparative Example A exhibited a substantial retention of fluorescent intensity after an irradiation time of 35 hours using the Hönle SOL 2 unit.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention.

## Claims

1. A luminescent fiber comprising:
a regenerated cellulose; and
a luminescent polycyclic compound comprising a heterocyclic ring, wherein the heterocyclic ring comprises two nitrogen atoms therein, and wherein the luminescent polycyclic compound is incorporated into the regenerated cellulose,
wherein the luminescent polycyclic compound is a luminescent bicyclic compound that includes the heterocyclic ring and one additional ring, and wherein said luminescent bicyclic compound is a substituted or unsubstituted quinazolinone.

2. The luminescent fiber of claim 1, wherein the luminescent polycyclic compound emits radiation in the visible and/or infrared spectrum.

3. The luminescent fiber of claim 1, wherein the luminescent fiber is free from visible body color.

4. An article comprising:
a substrate; and
luminescent fibers incorporated in the substrate, wherein the luminescent fibers comprise:
a regenerated cellulose; and
a luminescent polycyclic compound comprising a heterocyclic ring, wherein the heterocyclic ring comprises two nitrogen atoms therein,
wherein the luminescent polycyclic compound is a luminescent bicyclic compound that includes the heterocyclic ring and one additional ring, and wherein said luminescent bicyclic compound is a substituted or unsubstituted quinazolinone.

5. A method of forming luminescent fibers, wherein the method comprises the steps of:
combining a cellulose solution and a luminescent polycyclic compound to produce a fiber-forming composition, wherein combining the cellulose solution and the luminescent polycyclic compound comprises regenerating cellulose in the cellulose solution in the presence of the luminescent polycyclic compound to form the fiber-forming composition, and wherein the luminescent polycyclic compound comprises a heterocyclic ring, and wherein the heterocyclic ring comprises two nitrogen atoms therein;
spinning the fiber-forming composition to form the luminescent fibers,
wherein said luminescent polycyclic compound is a luminescent bicyclic compound that includes the heterocyclic ring and one additional ring, and wherein said luminescent bicyclic compound is a substituted or unsubstituted quinazolinone.

6. The method of claim 5, wherein combining the cellulose solution and the luminescent polycyclic compound comprises combining the cellulose solution and the luminescent polycyclic compound under alkaline conditions to produce the fiber-forming composition.

7. The luminescent fiber of claim 1, wherein the regenerated cellulose comprises rayon.

8. The luminescent fiber of claim 1, wherein the regenerated cellulose is chosen from the group of cupro, lyocell, viscose, modal, or combinations thereof.

9. The luminescent fiber of claim 1, wherein the luminescent bicyclic compound is present in the luminescent fiber in an amount of from 1 to 5 weight % based on the total weight of the luminescent fiber.

10. The luminescent fiber of claim 1, wherein, prior to spinning, the luminescent polycyclic compound is combined in a cellulose solution during regeneration of the cellulose, such that the luminescent bicyclic compound is present throughout a bulk of the luminescent fiber after spinning.

11. The article of claim 4, wherein the substrate comprises a base material selected from a group consisting of paper, paper pulp, a polymer, plastic, plastic base resin, glass, metal, a textile, fiber, ceramic, wood, a slurry, and combinations thereof.

12. The article of claim 4, wherein the article is selected from a group consisting of an identification card, a driver's license, a passport, identity papers, a banknote, a check, a document, a paper, a stock certificate, a packaging component, a credit card, a bank card, a label, a seal, or a postage stamp.

13. The method of claim 5, wherein combining the step of regenerating cellulose in the cellulose solution takes place under alkaline conditions and at a basic pH.

## Patentansprüche

1. Lumineszierende Faser, umfassend:
eine regenerierte Cellulose; und
eine lumineszierende polycyclische Verbindung, die einen heterocyclischen Ring umfasst, wobei der heterocyclische Ring zwei Stickstoffatome darin umfasst, und wobei die lumineszierende polycyclische Verbindung in die regenerierte Cellulose einverleibt ist, wobei die lumineszierende polycyclische Verbindung eine lumineszierende bicyclische Verbindung ist, die den heterocyclischen Ring und einen zusätzlichen Ring enthält, und wobei die lumineszierende bicyclische Verbindung ein substituiertes oder unsubstituiertes Chinazolinon ist.

2. Lumineszierende Faser gemäß Anspruch 1, wobei die lumineszierende polycyclische Verbindung Strahlung in dem sichtbaren und/oder infraroten Spektrum emittiert.

3. Lumineszierende Faser gemäß Anspruch 1, wobei die lumineszierende Faser frei von sichtbarer Körperfarbe ist.

4. Gegenstand, umfassend:
ein Substrat; und
in das Substrat einverleibte lumineszierende Fasern, wobei die lumineszierenden Fasern umfassen:
eine regenerierte Cellulose; und
eine lumineszierende polycyclische Verbindung, die einen heterocyclischen Ring umfasst, wobei der heterocyclische Ring zwei Stickstoffatome darin umfasst;
wobei die lumineszierende polycyclische Verbindung eine lumineszierende bicyclische Verbindung ist, die den heterocyclischen Ring und einen zusätzlichen Ring enthält, und wobei die lumineszierende bicyclische Verbindung ein substituiertes oder unsubstituiertes Chinazolinon ist.

5. Verfahren zur Herstellung von lumineszierenden Fasern, wobei das Verfahren die Schritte umfasst:
Kombinieren einer Celluloselösung und einer lumineszierenden polycyclischen Verbindung, um eine faserbildende Zusammensetzung zu bilden, wobei das Kombinieren der Celluloselösung und der lumineszierenden polycyclischen Verbindung Regenerieren von Cellulose in der Celluloselösung in Gegenwart der lumineszierenden polycyclischen Verbindung umfasst, um die faserbildende Zusammensetzung zu bilden, und wobei die lumineszierende polycyclische Verbindung einen heterocyclischen Ring umfasst und wobei der heterocyclische Ring zwei Stickstoffatome darin umfasst;
Spinnen der faserbildenden Zusammensetzung, um die lumineszierenden Fasern zu bilden,
wobei die lumineszierende polycyclische Verbindung eine lumineszierende bicyclische Verbindung ist, die den heterocyclischen Ring und einen zusätzlichen Ring enthält, und wobei die lumineszierende bicyclische Verbindung ein substituiertes oder unsubstituiertes Chinazolinon ist.

6. Verfahren gemäß Anspruch 5, wobei das Kombinieren der Celluloselösung und der lumineszierenden polycyclischen Verbindung Kombinieren der Celluloselösung und der lumineszierenden polycyclischen Verbindung unter alkalischen Bedingungen umfasst, um die faserbildende Zusammensetzung zu bilden.

7. Lumineszierende Faser gemäß Anspruch 1, wobei die regenerierte Cellulose Rayon umfasst.

8. Lumineszierende Faser gemäß Anspruch 1, wobei die regenerierte Cellulose ausgewählt ist aus der Gruppe von Cupro, Lyocell, Viskose, Modal und Kombinationen davon.

9. Lumineszierende Faser gemäß Anspruch 1, wobei die lumineszierende bicyclische Verbindung in einer Menge von 1 bis 5 Gew.-%, bezogen auf das Gesamtgewicht der lumineszierenden Faser, in der lumineszierenden Faser vorhanden ist.

10. Lumineszierende Faser gemäß Anspruch 1, wobei die lumineszierende polycyclische Verbindung vor dem Spinnen während des Regenerierens der Cellulose in eine Celluloselösung kombiniert wird, so dass nach dem Spinnen die lumineszierende bicyclische Verbindung innerhalb eines Hauptteils der lumineszierenden Faser vorhanden ist.

11. Gegenstand gemäß Anspruch 4, wobei das Substrat ein Grundmaterial ausgewählt aus einer Gruppe bestehend aus Papier, Papierpulpe, einem Polymer, Kunststoff-Grundharz, Glas, Metall, einer Textilie, Faser, Keramik, Holz, einer Aufschlämmung und Kombinationen davon umfasst.

12. Gegenstand gemäß Anspruch 4, wobei der Gegenstand ausgewählt ist aus einer Gruppe bestehend aus einer Ausweiskarte, einem Führerschein, einem Reisepass, Personalpapieren, einer Banknote, einem Scheck, einem Dokument, einem Papier, einem Aktienzertifikat, einer Verpackungskomponente, einer Kreditkarte, einer Bankkarte, einem Etikett, einem Siegel und einer Briefmarke.

13. Verfahren gemäß Anspruch 5, wobei bei dem Kombinieren de Schritt des Regenerierens von Cellulose in der Celluloselösung unter alkalischen Bedingungen und bei einem basischen pH-Wert erfolgt.

## Revendications

1. Fibre luminescente comprenant :
une cellulose régénérée ; et
un composé polycyclique luminescent comprenant un cycle hétérocyclique, le cycle hétérocyclique comprenant deux atomes d'azote, et le composé polycyclique luminescent étant incorporé dans la cellulose régénérée,
dans laquelle le composé polycyclique luminescent est un composé bicyclique luminescent comprenant le cycle hétérocyclique et un cycle additionnel, et dans laquelle ledit composé bicyclique luminescent est une quinazolinone substituée ou non substituée.

2. Fibre luminescente selon la revendication 1, dans laquelle le composé polycyclique luminescent émet un rayonnement dans le spectre visible et/ou infrarouge.

3. Fibre luminescente selon la revendication 1, le corps de la fibre luminescente n'ayant pas de couleur visible.

4. Article comprenant :
un substrat ; et
des fibres luminescentes incorporées dans le substrat, les fibres luminescentes comprenant :
une cellulose régénérée ; et
un composé polycyclique luminescent comprenant un cycle hétérocyclique, le cycle hétérocyclique comprenant deux atomes d'azote,
dans lequel le composé polycyclique luminescent est un composé bicyclique luminescent qui comprend le cycle hétérocyclique et un cycle additionnel, et dans lequel ledit composé bicyclique luminescent est une quinazolinone substituée ou non substituée.

5. Procédé de formation de fibres luminescentes, le procédé comprenant les étapes qui consistent à :
combiner une solution de cellulose et un composé polycyclique luminescent pour produire une composition fibrogène, la combinaison de la solution de cellulose et du composé polycyclique luminescent comprenant la régénération de cellulose dans la solution de cellulose en présence du composé polycyclique luminescent pour former la composition fibrogène, et le composé polycyclique luminescent comprenant un cycle hétérocyclique, et le cycle hétérocyclique comprenant deux atomes d'azote ;
filer la composition fibrogène pour former les fibres luminescentes,
dans lequel ledit composé polycyclique luminescent est un composé bicyclique luminescent qui comprend le cycle hétérocyclique et un cycle additionnel, et dans lequel ledit composé bicyclique luminescent est une quinazolinone substituée ou non substituée.

6. Procédé selon la revendication 5, dans lequel la combinaison de la solution de cellulose et du composé polycyclique luminescent comprend la combinaison de la solution de cellulose et du composé polycyclique luminescent dans des conditions alcalines pour produire la composition fibrogène.

7. Fibre luminescente selon la revendication 1, dans laquelle la cellulose régénérée comprend de la rayonne.

8. Fibre luminescente selon la revendication 1, dans laquelle la cellulose régénérée est choisie dans le groupe du cupro, du lyocell, de la viscose, du modal ou de combinaisons de ceux-ci.

9. Fibre luminescente selon la revendication 1, le composé bicyclique luminescent étant présent dans la fibre luminescente en une quantité de 1 à 5 % en poids par rapport au poids total de la fibre luminescente.

10. Fibre luminescente selon la revendication 1, dans laquelle, avant le filage, le composé polycyclique luminescent est combiné dans une solution de cellulose pendant la régénération de la cellulose, de façon telle que le composé bicyclique luminescent est présent dans toute une masse de la fibre luminescente après filage.

11. Article selon la revendication 4, dans lequel le substrat comprend un matériau de base choisi dans un groupe constitué par du papier, de la pâte à papier, un polymère, du plastique, de la résine de base de plastique, du verre, du métal, un textile, une fibre, de la céramique, du bois, une suspension épaisse et des combinaisons de ceux-ci.

12. Article selon la revendication 4, l'article étant choisi dans un groupe constitué par une carte d'identité, un permis de conduire, un passeport, des papiers d'identité, un billet de banque, un chèque, un document, un papier, un certificat d'actions, un composant d'emballage, une carte de crédit, une carte bancaire, une étiquette, un cachet ou un timbre postal.

13. Procédé selon la revendication 5, dans lequel la combinaison de l'étape de régénération de cellulose dans la solution de cellulose a lieu dans des conditions alcalines et à un pH basique.
